Europäisches Patentamt

European Patent Office

Office européen des brevets

(11) Veröffentlichungsnummer: **0 296 370**
**A2**

(12) ## EUROPÄISCHE PATENTANMELDUNG

(21) Anmeldenummer: 88108389.3

(22) Anmeldetag: 26.05.88

(51) Int. Cl.⁴: **B29C 47/20 , B29C 47/06 ,**
**B29C 47/58**

(30) Priorität: 22.06.87 DE 3720560

(43) Veröffentlichungstag der Anmeldung:
28.12.88 Patentblatt 88/52

(84) Benannte Vertragsstaaten:
**AT BE FR GB GR IT NL SE**

(71) Anmelder: **BEKUM Maschinenfabriken GmbH**
**Lankwitzerstrasse 14/15**
**D-1000 Berlin 42(DE)**

(72) Erfinder: **Pohl, Harald**
**Kottbusser Damm 79**
**D-1000 Berlin 61(DE)**

(74) Vertreter: **Huss, Carl-Hans, Dipl.-Ing.**
**Patentanwalt Griesstrasse 3 a Postfach 14 54**
**D-8100 Garmisch-Partenkirchen(DE)**

(54) Coextrusionskopf.

(57) Die üblicherweise herzustellenden Mehrschicht-Schläuche haben entweder einen symmetrischen Schichtaufbau mit mittiger Sperrschicht, beidseitigen Haftvermittlerschichten sowie äußeren Träger-schichten, wobei zwischen Trägerschicht und Haftvermittlerschicht einseitig oder beidseitig Regeneratschichten vorgesehen sein können, oder aber einen entsprechenden einseitigen Aufbau, der sich von der Trägerschicht bis zur Sperrschicht er-streckt. Um ohne Umrüstungsaufwand mit unverän-derter Extruderlage alle derartigen Schlauchstruktu-ren erzeugen zu können, hat der erfindungsgemäße Coextrusionskopf einen Kernring 18 und einen Düsenring 19, die austauschbar angeordnet sind und wahlweise Ringkanäle versperren können. Zwischen dem Kernring 18 und dem Düsenring 19 wird der vereinigte Mehrschicht-Schlauch glatt in die Eintritt-söffnung 23 der Düse 22 des Coextrusionskopfes geführt.

FIG. 2

EP 0 296 370 A2

## Coextrusionskopf

Die Erfindung betrifft einen Coextrusioskopf für die Herstellung von aus maximal sieben Schichten bestehenden, als Vorformlinge in Blasformen weiterzuverarbeitenden Schläuchen aus Kunststoff, mit mit maximal sieben Einspeisebohrungen in Verbindung stehenden Ringkanälen, in denen die Schichten ausgeformt werden, die am unteren Ende von die Ringkanäle begrenzenden Hülsen vereinigt und als Mehrschicht-Schlauch zu einer Düse geführt werden, aus der der fertige Schlauch schließlich austritt.

Die gegenwärtig herzustellenden Mehrschicht-Schläuche haben bis auf wenige Ausnahmen entweder einen symmetrischen Aufbau mit einer mittigen Sperrschicht, beidseitig daran angrenzenden Haftschichten sowie einer inneren und einer äußeren Trägerschicht, wobei zwischen Haftschicht und Trägerschicht einseitig oder beidseitig zusätzlich eine Regeneratschicht angeordnet sein kann, oder sie enthalten nur jeweils den inneren oder äußeren Teil dieses Aufbaus, der mit der dann außenliegenden oder innenliegenden Sperrschicht abschließt. Da diese Materialien zunächst zu Einzelschläuchen ausgeformt werden, deren Wanddicke auf Millimeterbruchteile genau einzuhalten ist, ist es bisher üblich, für jede herzustellende Schlauchstruktur einen besonderen Coextrusionskopf mit zugehöriger Extruderbestückung bereitzuhalten. Dies ist erforderlich, weil sich bei den verschiedenen Schlauchstrukturen die Trägerschicht-, Haftschicht-, Sperrschicht- und gegebenenfalls Regeneratschichtschläuche an unterschied lichen Stellen befinden und dort jeweils verschiedene material- und massedurchsatzgerechte Extruderausrüstungen und Verteilerkurven benötigen.

Diese Vielfalt von Extrusionsköpfen und zugehörigen Ausrüstungen ist mit erheblichen Kosten verbunden, so daß bei kleinen Herstellungsmengen die Coextrusionstechnik häufig unwirtschaftlich ist und deshalb herkömmliche Behälterproduktionen vorgezogen werden.

Der vorliegenden Erfindung liegt die Aufgabe zugrunde, einen Coextrusionskopf der betrachteten Art so weiterzuentwickeln, daß mit diesem ohne nennenswerten Umrüstungsaufwand mit unveränderter Extruderlage alle gängigen Schlauchstrukturen hergestellt werden können.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Der erfindungsgemäße Coextrusionskopf hat einen inneren Kernring und einen äußeren Düsenring, die in Fließrichtung vor der Austrittsdüse des Coextrusionskopfes liegend angeordnet sind und den aus den einzelnen Schichten gebildeten Mehrschicht-Schlauch von dessen unterem Vereinigungsbereich bis zum Eintritt in die Düse zwischen sich führen. Der Kernring und der Düsenring sind austauschbar und können eine solche Form haben, daß sie im unteren Vereinigungsbereich der Schichten wahlweise einen oder mehrere Ringkanäle oder die Zufuhr aus diesen verschließen. So kann dann beispielsweise anstelle einer 7-Schicht-Schlauchstruktur ein aus vier Schichten bestehender Schlauch mit innenliegender oder außenliegender Sperrschicht ausgebildet werden.

Dabei ist die glatte seitliche Führung des jeweiligen Mehrschicht-Schlauches von seinem Vereinigungsbereich zu der Düse des Coextrusionskopfes eine wesentliche Voraussetzung für die Herstellung einer einwandfreien Schlauchstruktur, die ohne eine derartige Führung, lediglich durch Abschlatung der zugehörigen Extruder, nicht erreichbar wäre.

Zweckmäßigerweise sind die Ringkanäle symmetrisch zu dem die mittige Sperrschicht führenden Ringkanal angeordnet. Hierzu kann beispielsweise ein ausschließlich radialer Hülsenaufbau vorgesehen sein, der konzentrisch Ringkanäle für die innere und äußere Trägerschicht, die Regeneratschichten und die Haftschichten bildet.

Der innere Kernring und der äußere Düsenring können dieselbe Querschnittsform mit einem abgeschrägten Kopfabschnitt haben, dessen Neigung derjenigen der gegenüberliegenden Unterseite der zugehörigen Hülse entspricht und im Abstand von dieser liegt. Außerdem weisen sie jeweils eine vertikale Innenwand auf, die mit der Eintrittsöffnung der Düse fluchtet. Bei einem symmetrischen Hülsenaufbau wird infolge der übereinstimmenden Querschnittsform des Kernrings und des Düsenrings kein Ringkanal versperrt, so daß ein Mehrschicht-Schlauch symmetrischer Schichtanordnung, beisoielsweise ein 7-oder 5-Schicht-Schlauch auf diese Weise herstellbar ist.

Wenn. jedoch der innere Kernring oder der äußere Düsenring mit dem Kopfabschnitt an der zugewandten Hülsenwand anliegt und damit den entsprechenden Ringkanal bzw. die Teilschlauch bildende Zusammenfassung mehrerer Ringkanäle verschließt, wird die Zufuhr der zwei oder drei Schichten gesperrt, die im unteren Vereinigungsbereich der Hülsen in diesem Ringkanal geführt werden können. Es entsteht somit ein aus drei Schichten oder - wenn ein Ringkanal für die Regeneratschicht vorgesehen ist - ein aus vier Schichten bestehender Schlauch in demselben Coextruionskopf, in dem hierzu lediglich entweder der Kernring oder der Düsenring gegen einen Ring anderer Querschnittsform ausgetauscht werden muß.

Mit großem Vorteil ist vorgesehen, daß die Innenwand des Kernrings so geformt ist, daß sie zunächst mit der den mittigen Ringkanal begrenzenden Hülsenwand fluchtet und anschließend von der gegenüberliegenden Innenwand des Düsenrings einen zunehmenden Abstand hat, bis dieser Abstand mit der Breite der Düseneintrittsöffnung übereinstimmt. Damit wird der Mehrschicht-Schlauch an seiner Innen und Außenseite glatt bis zur Eintrittsöffnung der Düse geführt, so daß die Schlauchstruktur nicht beeinträchtigt wird.

Gemäß der Erfindung wird ferner vorgeschlagen, daß zur Zufuhr der Trägerschichten, der Haftvermittlerschichten und gegebenenfalls der Regeneratschichten jeweils zwei Einspeisebohrungen angeordnet sind, die über jeweils einen Verteiler mit einem zugehörigen Extruder verbindbar sind. Für die Sperrschicht ist dabei nur eine Einspeisebohrung vorgesehen. Die jeweils zusammengehörenden zwei Einspeisebohrungen sind zweckmäßigerweise in axialer Richtung des Coextrusionskopfes in einem auf den Verteiler abgestimmten Abstand übereinanderliegend angeordnet.

Diese Ausgestaltung hat den Vorteil, daß der Coextrusionskopf für den Prodktionsbetrieb mit vier Extrudern beaufschlagt werden kann, während vorwiegend für den Laborbetrieb auch mehr, maximal sieben Extruder angeschlossen werden können.

Der erfindungsgemäße Coextrusionskopf verwendet jeweils einen Düsen- und einen Kernring, die wahlweise als sperrende oder nichtsperrende Ringe eingesetzt werden können und ohne weitere Umrüstarbeiten die Produktion aller gängigen Mehrschicht-Schläuche ermöglichen. Dabei übernimmt der Kernring die Absperrung der inneren und der Düsenring die der äußeren Schlauchschichten. Zwischen dem jeweils eingesetzten Kernring und Düsenring wird der zusammengeführte Mehrschicht-Schlauch glatt in die Eintrittsöffnung der Düse am unteren Ende des Coextrusionskopfes eingeführt, aus der der fertige Schlauch austritt. Die Extruderlage kann bei dem erfindungsgemäßen Coextrusionskopf, der sieben Einspeisebohrungen enthält, stets unverändert beibehalten werden.

Weitere Merkmale, Vorteile und Einzelheiten der Erfindung ergeben sich aus der nachfolgenden Beschreibung einer bevorzugten Ausführungsform sowie anhand der Zeichnungen. Dabei zeigen:

Fig. 1 eine Ansicht des erfindungsgemäßen Coextrusionskopfes, die die Lage der Einspeisebohrungen zeigt und eines Verbinders in rein - schematischer Darstellung und verkleinertem Maßstab;

Fig. 2 einen rein schematischen Längsschnitt durch den Coextrusionskopf und

Fig. 3 bis 5 Darstellungen des Vereinigungsbereichs der Schichten zur Erläuterung der Funktion des Düsenringes und des Kernringes bei der Herstellung eines 7-Schicht-Schlauches, eines 4-Schicht-Schlauches mit innenliegender Sperrschicht und eines 4-Schicht-Schlauches mit außenliegender Sperrschicht.

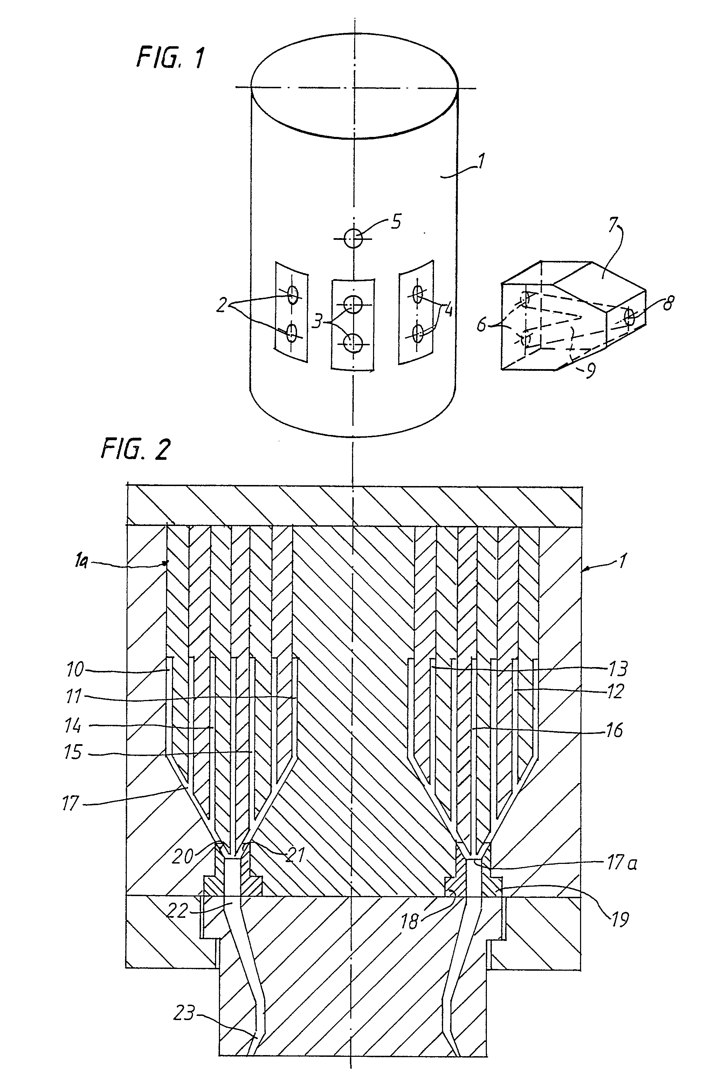

Es wird zunächst auf Fig. 1 Bezug genommen, in der auf rein schematische Weise ein Coextrusionskopf 1 dargestellt ist, der jeweils zwei übereinander angeordnete Einspeisebohrungen 2 für Trägerschichten, 3 für Haftvermittlerschichten und 4 für Regeneratschichten aufweist sowie eine einzige Einspeisebohrung 5 für eine Sperrschicht. Die jeweils paarweise übereinander angeordneten Einspeisebohrungen 2 bis 4 haben einen Abstand voneinander, der mit dem Abstand zweier Austrittsöffnungen 6 eines Verteilers 7 übereinstimmt, der jeweils einen nicht dargestellten Extruder mit den paarweise vorgesehenen Einspeisebohrungen 2 bis 4 verbinden kann. Der Verteiler 7 hat eine Eintrittsöffnung 8 und zwei den Austrittsöffnungen 6 hin sich verzweigende Kanäle 9.

Der in Fig. 2 in Längsschnitt dargestellte Extrusionskopf hat eine ausschließlich radiale Ringkanäle bildende, allgemein mit 1a bezeichnete Hülsenanordnung, die einem symmetrischen 7-Schichtaufbau ermöglicht. Der in den durch die konzentrische Hülsenanordnung 1a gebildeten Kanälen entstehende 7-Schichtaufbau besteht aus einer inneren und äußeren Trägerschicht 10, 11, sich nach innen anschließenden Regeneratschichten 12, 13, Haftvermittlerschichten 14, 15 sowie der mittigen Sperrschicht 16, die nacheinander in einem zur mittigen Sperrschicht hin geneigten Ringkanal 17 zusammengeführt werden.

Der untere Vereinigungsbereich 17a der die Schichten bildenden Kanäle ist von einem inneren Kernring 18 und einem äußeren Düsenring 19 umfaßt, die austauschbar in dem Coextrusionskopf angeordnet sind und eine sperrende oder nichtsperrende Funktion haben können. Die beiden Ringe 18 und 19 haben jeweils einen abgeschrägten Kopfabschnitt 20, 21, dessen Neigung derjenigen der gegenüberliegenden Unterseite der zugehörigen Hülse entspricht. Zwischen dem Kernring 18 und dem Düsenring 19 wird der vereinigte Mehrschicht-Schlauch in die Eintrittsöffnung 22 der Düse 23 eingeführt, aus der schließlich der fertige Schlauch den Extrusionskopf verläßt.

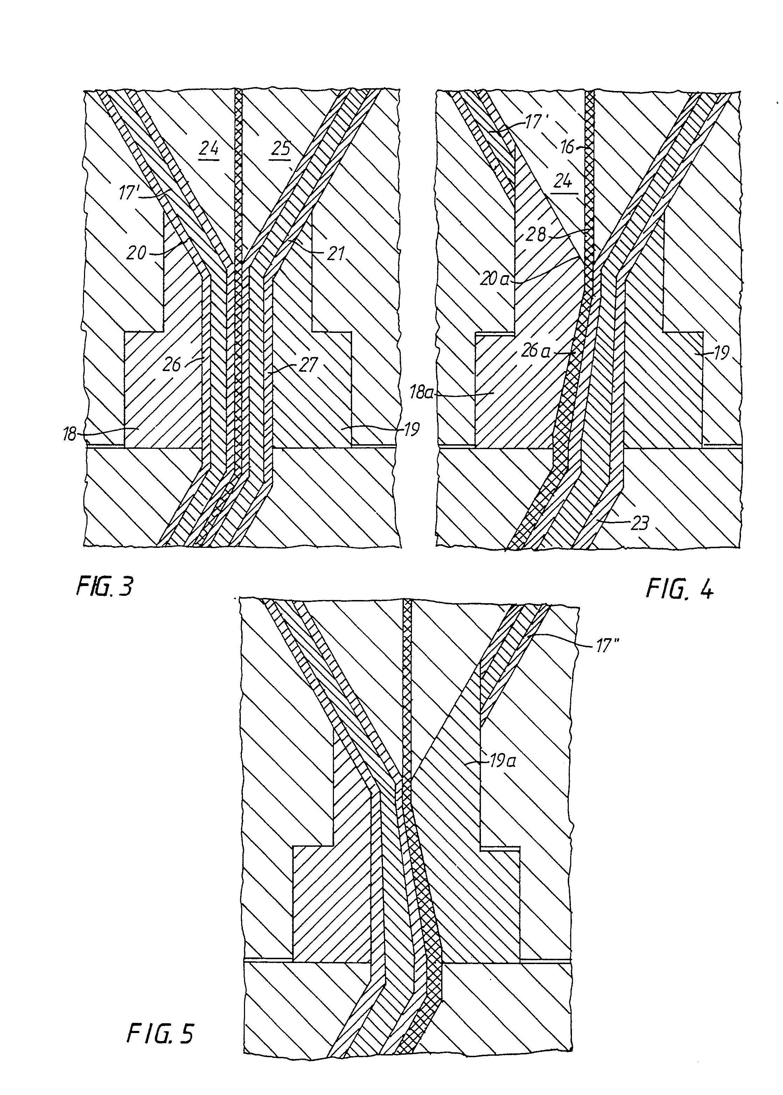

In Fig. 3 ist eine Anordnung zur Herstellung eines 7-Schicht-Schlauches veranschaulicht, bei der die in Fig. 2 dargestellten Ringe 18 und 19 Verwendung finden, die eine identische Querschnittsform haben. Ihre Kopfabschnitte 20 und 21 haben einen Abstand von den gegenüberliegenden Hülsen 24 und 25 und ihre vertikalen Innenwände 26 und 22 einen Abstand voneinander, der der Breite der Eintrittsöffnung 22 der Düse 23 entspricht.

In Fig. 4 ist der nichtsperrende Kernring 18 der vorhergehenden Figuren gegen einen sperrenden Kernring 18a ausgetauscht, der mit seinem Kopfabschnitt 20a an der gegenüberliegenden Unterseite der Hülse 24 anliegt und den entsprechenden Ringkanal 17', in dem die Schichten 11, 13 und 15 zusammenkommen, versperrt. Die Innenwand 26a des Kernrings 18a hat einen solchen Velauf, daß sie im oberen Bereich mit der den mittigen Ringkanal 16 begrenzenden Hülsenwand 28 und im unteren Bereich mit der Eintrittsöffnung der Düse 23 fluchtet, so daß der mit dieser Anordnung erzeugte 4-Schicht-Schlauch mit innenliegender Sperrschicht 16, der anliegenden Haftschicht 15, der Regeneratschicht 13 und der Tragschicht 11 glatt in die Eintrittsöffnung 22 der Düse geführt wird.

In Fig 5 versperrt ein äußerer Düsenring 19a auf entsprechende Weise den zugehörigen Ringkanal 17'', so daß mit dieser Anordnung ein 4-Schicht-Schlauch mit außenliegender Sperrschicht herstellbar ist.

Die vorstehende beschriebenen Herstllungsbeispiele für 7-Schicht- und 4-Schicht-Schläuche gelten entsprechend für 5-Schicht- und 3-Schicht-Schlauchstrukturen, wobei diese durch Weglassen der inneren und äußeren Verteilungskurven im Coextrusionskopf oder durch gleiche Materialbeschickung der Regenerat- und Trägerschichthülsen erzeugt werden können.

## Ansprüche

1. Coextrusionskopf für die Herstellung von aus maximal sieben Schichten bestehenden, als Vorformlinge in Blasformen weiter zu verarbeitenden Schläuchen aus Kunststoff, mit mit maximal sieben Einspeisebohrungen (2-5) in Verbindung stehenden Ringkanälen, in denen die Schichten ausgeformt werden, die am unteren Ende von die Ringkanäle begrenzenden Hülsen vereinigt und als Mehrschicht-Schlauch zu einer Düse (23) geführt werden, aus der der fertige Schlauch schließlich austritt, **gekennzeichnet**durch einen inneren Kernring (18, 18a) und einen äußeren Düsenring (19, 19a), die austauschbar angeordnet sind und den Mehrschicht-Schlauch zwischen sich zu der Düse (23) führen, wobei sie den unteren Vereinigungsbereich (17) der Schichten (10-16) so umfassen, daß sie einen oder mehrere Ringkanäle verschließen können.

2. Coextrusionskopf nach Anspruch 1, dadurch **gekennzeichnet,**daß die Ringkanäle symmetrisch zu dem die mittige Sperrschicht (16) führenden Ringkanal angeordnet sind.

3. Coextrusionskopf nach Anspruch 1 oder 2, dadurch **gekennzeichnet,** daß der innere Kernring (18) und der äußere Düsenring (19) dieselbe Querschnittsform mit einem abgeschrägten Kopfabschnitt (20,21) aufweisen, dessen Neigung derjenigen der gegenüberliegenden Unterseite der zugehörigen Hülse (24,25) entspricht und eine vertikale Innenwand (26,27), **die** mit der Eintrittsöffnung (22) der Düse (23) fluchtet.

4. Coextrusionskopf nach Anspruch 1 oder 2, dadurch **gekennzeichnet,** daß der innere Kernring (18a) mit seinem Kopfabschnitt (20a) an der ihm zugewandten Hülse (24) anliegt und den die Innenschichten (11,13,15) führenden Ringkanal (17') versperrt.

5. Coextrusionskopf nach Anspruch 4, dadurch **gekennzeichnet,** daß die Innenwand (26a) des Kernrings (18a) so geformt ist, daß sie zunächst mit der den mittigen Ringkanal begrenzenden Hülsenwand (28) fluchtet und anschließend einen zunehmenden Abstand von der gegenüberliegenden Innenwand des Düsenrings (19) annimmt, bis dieser Abstand mit der Breite der Düseneintrittsöffnung (22) übereinstimmt.

6. Coextrusionskopf nach Anspruch 1 oder 2, dadurch gekennzeichnet, daß der äußere Düsenring (19a) mit seinem kopfabschnitt an der ihm zugewandten Hülse anliegt und den die Außenschichten (10,12,14) führenden Ringkanal (17'') versperrt.

7. Coextrusionskopf nach Anspruch 6, dadurch **gekennzeichnet,** daß die Innenwand des Düsenrings (19a) so geformt ist, daß sie zunächst mit der den mittigen Ringkanal begrenzenden Hülsenwand fluchtet und anschließend einen zunehmenden Abstand von der gegenüberliegenden Innenwand des Kernrings (18) einnimmt, bis dieser Abstand mit der Breite der Düseneintrittsöffnung (22) übereinstimmt.

8. Coextrusionskopf nach einem der Ansprüche 1 bis 7, dadurch **gekennzeichnet,** daß zur Zufuhr der Trägerschichten (10,11) der Haftvermittlerschichten (14,15) und gegebenenfalls der Regeneratschichten (12,13) jeweils zwei Einspeisebohrungen (2,3,4) angeordnet sind, die über jeweils einen Verteiler (7) mit einem zugehörigen Extruder verbindbar sind.

9. Coextrusionskopf nach Anspruch 8, dadurch **gekennzeichnet,** daß die jeweils zwei Einspeisebohrungen (2,3,4) in axialer Richtung des Coextrusionskopfes (1) übereinanderliegend angeordnet sind.

FIG. 1

FIG. 2

FIG. 3

FIG. 4

FIG. 5